(19) Europäisches Patentamt
European Patent Office
Office européen des brevets

(11) EP 2 017 026 A2

(12) EUROPEAN PATENT APPLICATION

(43) Date of publication:
21.01.2009 Bulletin 2009/04

(51) Int Cl.:
B23D 59/00 (2006.01)    B27B 27/00 (2006.01)

(21) Application number: 08252398.6

(22) Date of filing: 14.07.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 18.07.2007  US 779531

(71) Applicant: Techtronic Industries Company
Limited
Tsuen Wan New Territories
Hong Kong (CN)

(72) Inventors:
• Nortmann, Bernhard
Tin Shui Wai
Hong Kong (HK)
• Li,Huabo
YongXin Zone-Nanning City (CN)

(74) Representative: Martin, David John et al
Marks & Clerk
43 Park Place
Leeds
LS1 2RY (GB)

(54) **Digital measurement system**

(57)  A digital measurement system for use with a tool, such as a miter saw (10). The digital measurement system includes a detecting device (44) and a digital display (22) coupled with the tool (10) to measure the length of a workpiece (30). Each time an aperture (42) passes through the detecting device (44) the detecting device (44) sends an electronic signal to the digital display (22) to calculate and display the length traveled by the workpiece (30).

Figure 1

## Description

## BACKGROUND

The present invention relates to measurement systems for power tools, and more specifically, to digital measurement systems for a tool such as, for example, a miter saw.

Miter saws are typically used for cutting workpieces. To calculate the length of the workpiece to be cut, a user typically uses a conventional tape measure or a ruler to mark the workpiece at the desired cutting length. The user then places the workpiece on the miter saw and aligns the marking line on the workpiece with the cutting blade. The user begins the cutting process once the marking line and cutting blade are aligned. The miter saw is powered on and the workpiece is cut. The user may then repeat the process by powering off the miter saw and manually measuring and marking the workpiece, or another workpiece, and aligning the marking line on the workpiece with the cutting blade.

The measuring process, as one might see, is time consuming and tedious. Miter saws may be used in the construction of large structures such as houses and buildings. A user in such a context is required to cut a large quantity of material, most with varying lengths. However, with the current way of measuring the workpiece, the user is severely limited in the number of workpieces that can be cut within a particular timeframe.

Miter saws may also be used for small wood working projects, such as constructing furniture or picture frames. In such a context, the dimensions of the workpiece must be extremely accurate. However, a user in this context typically does not have the level of skill required to manually measure, align, and cut a workpiece at consistent level of accuracy. As a result, the user often spends additional, and unnecessary, time re-cutting or re-measuring the workpiece, to achieve the desired level of accuracy.

These and other problems are addressed by the present invention, as summarized below.

## SUMMARY

According to a first aspect, the invention provides a measurement device coupled with a power tool comprising a rotatable member rotatable about an axis, a shaft having a first end and being coupled with the rotatable member along the axis, a disk coupled with the first end of the shaft, and a detecting device disposed adjacent to the disk, wherein the detecting device provides an output as a portion of a workpiece actuates the disk of the detecting device.

Preferably, a mounting bracket is provided having a first portion and a second portion with the mounting bracket being coupled to the shaft. At least one biasing member couples the first portion of the mounting bracket with the second portion of the mounting bracket. At least one pin member may couple the first portion of the mounting bracket with the second portion of the mounting bracket. The detecting device may be coupled with the first portion of the mounting bracket.

In one version the disk may have at least one electrical sensor disposed thereon. Alternatively, the disk may have at least one reflective marker disposed thereon. The disk may have at least one aperture formed therein, or a plurality of evenly spaced apertures.

The detecting device preferably has at least one light emitting source and at least one sensor.

The second portion of the mounting bracket may be associated with a portion of a fence of the power tool or may be associated with a base of the power tool.

The rotatable member may be a roller, which may further comprise a gripping element to grip a workpiece.

According to a further aspect the invention provides a measurement device coupled with a power tool comprising a roller rotatable about an axis, a shaft having a first end and a second end and being fixably coupled with the roller along the axis, a disk coupled with the first end of the shaft, and a mounting bracket coupled to the first end and the second end of the shaft, the mounting bracket further comprising a first portion reciprocally coupled with a second portion by at least one biasing member, and a detecting device coupled with the first portion of the mounting bracket and disposed adjacent to the disk, wherein the detecting device provides an output as a portion of a workpiece actuates the disk of the detecting device.

According to a further aspect the invention provides a measurement device coupled with a power tool comprising a roller rotatable about an axis, a shaft having a first end and a second end and being fixably coupled with the roller along the axis, a disk coupled with the first end of the shaft, the disk having a plurality of apertures formed therein, where the plurality of apertures are spaced evenly around a circumference of the disk, a mounting bracket coupled to the shaft, the mounting bracket further comprising a first portion coupled with a second portion by at least one biasing member, and coupled with the first end and the second end of the shaft, and a detecting device coupled with the first portion of the mounting bracket, wherein the detecting device further comprises at least one light emitting source and at least one sensor, where the disk is disposed therebetween, wherein the detecting device generates an electrical pulse each time the at least one aperture passes between the detecting device as the disk is rotated by a workpiece.

According to another aspect of the present invention, there is provided a measurement device coupled with a power tool comprising a housing, a digital display coupled with the housing, a roll tape disposed in the housing, and a detecting device disposed in the housing adjacent to a portion of the roll tape, wherein the detecting device generates an electrical signal as the roll tape is displaced by a workpiece.

According to another aspect of the present invention, there is provided a measurement device coupled with a power tool comprising a housing disposed on a fence, a digital display coupled with the housing, a roll tape disposed in the housing having a series of evenly spaced apertures formed therein, and a detecting device disposed in the housing, the detecting device comprising at least one light emitting source and at least one sensor with a least a portion of the roll tape disposed therebetween, where the roll tape is displaced by a workpiece, such that each time an aperture passes between the detecting device an electrical pulse is generated and transmitted to the display system.

## BRIEF DESCRIPTION OF THE DRAWINGS

Figure 1 is a perspective view of one embodiment of the digital measurement system according to the present invention and shown incorporated on a fence of a miter saw.

Figure 2 is a front view of one embodiment of the measurement device.

Figure 3 is a fragmentary view of the measurement device shown in Figure 2.

Figure 4 is a top view of the measurement device shown in Figure 2.

Figure 5 is a perspective view of one aspect of the measurement device shown in Figure 2.

Figure 6 is a top view of one aspect of the measurement device shown in Figure 5.

Figure 7 is a perspective view of another embodiment of the digital measurement system according to the present invention and shown incorporated on a base of a miter saw.

Figure 8 is perspective view of another embodiment of the measurement device.

Figure 9 is a perspective view of yet another embodiment of the digital measurement system incorporated on the fence of the miter saw.

## DETAILED DESCRIPTION OF EMBODIMENTS

The invention is described with reference to the drawings in which like elements are referred to by like numerals. The relationship and function of the various elements of this invention are better understood by the following description. Each aspect so defined may be combined with any other aspect or aspects unless clearly indicated to the contrary. The embodiments described below are by way of example only, and the invention is not limited to the embodiments illustrated in the drawings

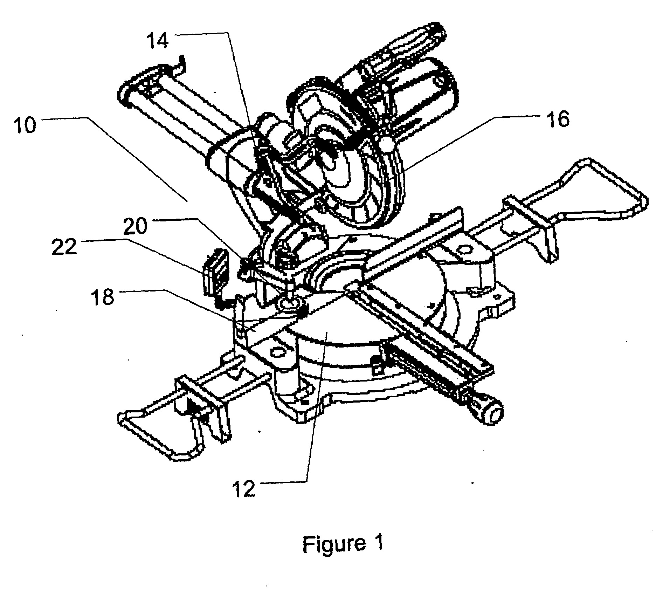

Turning now to the drawings and referring to FIG. 1, a digital measurement system is shown incorporated on a miter saw 10. By way of background, the miter saw 10 includes a base 12 and a housing 14 pivotally coupled with the base 12. A saw blade 16 is rotatably connected to the housing 14. A fence 18 is coupled with the base 12 and extends upward from the base 12 in a known manner.

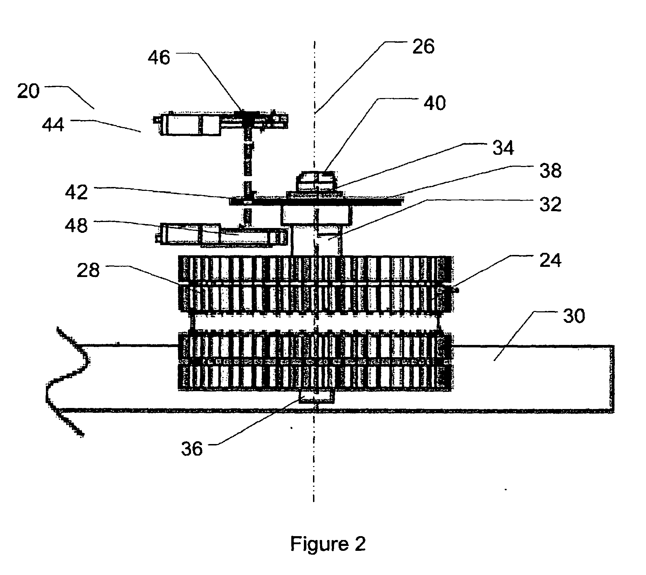

In one embodiment of the digital measurement system, a measurement device 20 and a digital display 22 are coupled with the tool. Desirably, one embodiment of measurement device 20 is coupled with the fence while the digital display 22 may be conveniently located on a portion of the miter saw 10 for viewing by the user. The measurement device 20, as illustrated in Figure 2, includes a rotatable member 24 that is rotatable about an axis 26. The rotatable member 24 may be, without limitation, one large roller, a series of rollers, a disk, or a combination thereof. The rotatable member 24 may also have a series of ridges or gripping elements 28 extending radially from the rotatable member 24 to help grip a workpiece 30. A shaft 32 having a first end 34 and a second end 36 has a portion that carries the rotatable member 24.

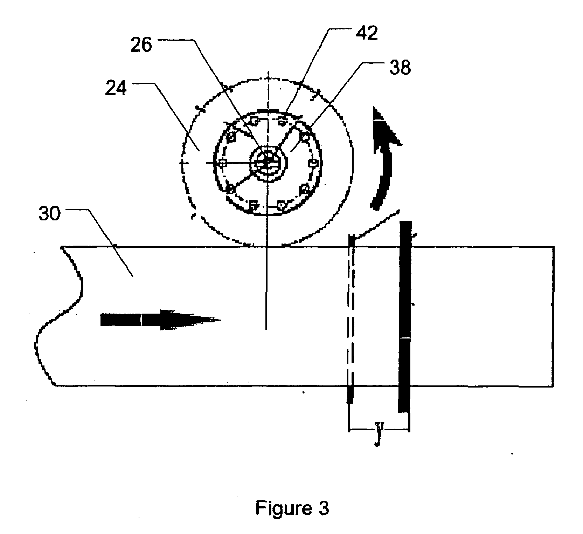

A disk 38 is axially fixed adjacent the first end 34 of the shaft 32 with a fastener 40. It can be appreciated that the disk 38 may have, for example, a rectangular, square, or a triangular shape. As shown in Figure 3, the disk 38 may have a series of apertures 42 disposed about the circumference of the disk 38. The apertures 42 may have, without limitation, a circular, rectangular, or a triangular shape. The apertures 42 may be radially staggered with respect to one another.

Referring back to Figure 2, the measurement device 20 also includes a detecting device 44 that is disposed adjacent to the disk 38. The detecting device 44 includes a light emitting source 46 and a sensor 48, such that the light emitting source 46 is disposed on one side of the disk 38 and the sensor 48 is disposed on the other side of the disk 38. The light emitting source 46 may be a light emitting diode (LED), a laser, or any other type of device that emits light. The relative positions of the light emitting source 46 and the sensor 48 may be reversed, if desired. The light emitting source 46 and the sensor 48 are aligned such that as the disk 38 rotates, an aperture 42 will pass substantially between the light emitting source 46 and the sensor 48, and allow the sensor 48 to detect the light generated from the light emitting source 46. In the alternative, the disk 38 may have a series of sensors or reflectors that can produce substantially the same result as the apertures 42. For example, and without limitation, a series of sensors may also be displaced around the circumference of the disk 38, and when the sensor detects a light generated from the light emitting source 46, the sensor will send a signal to the appropriate system. Reflectors can also be used in the place of the apertures 42 and would reflect the light produced by the light emitting source 46 to the sensor 48 disposed within the detecting device 44. In these embodiments, the configuration of the detecting device 44 may be implementation dependent. In electrical connection with the measurement device 20 may be the digital display system 22.

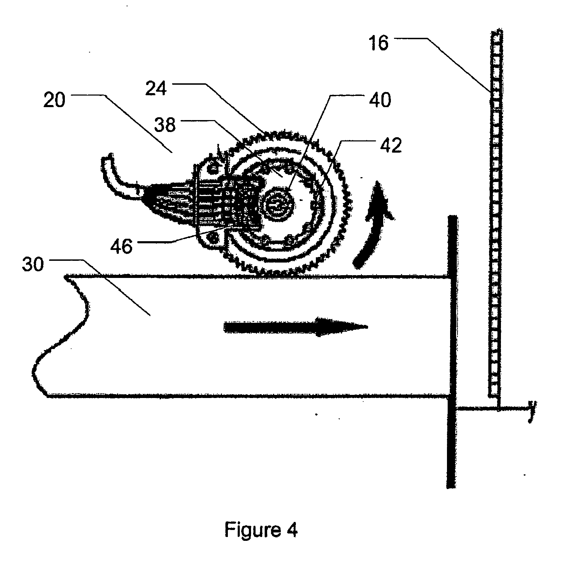

As illustrated in Figure 4, the detecting device 44 may include more than one light emitting sources 46 and sensors 48. If so, it should be noted that each light emitting source will be substantially aligned with a respective sensor 48 to detect the light emitted as the disk 38 is rotated.

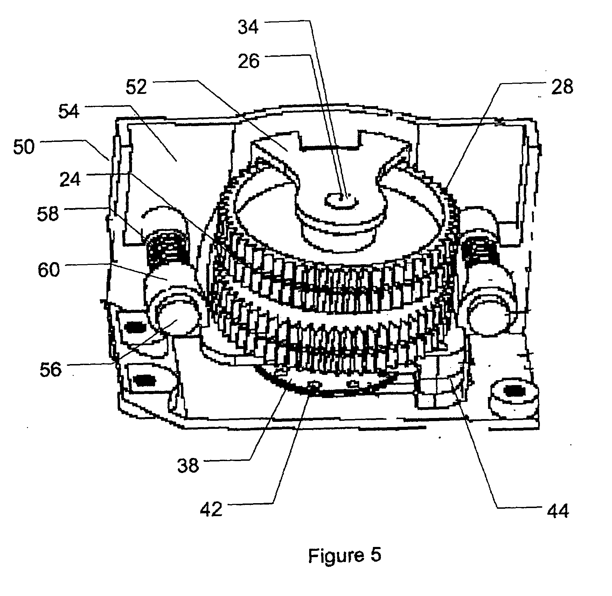

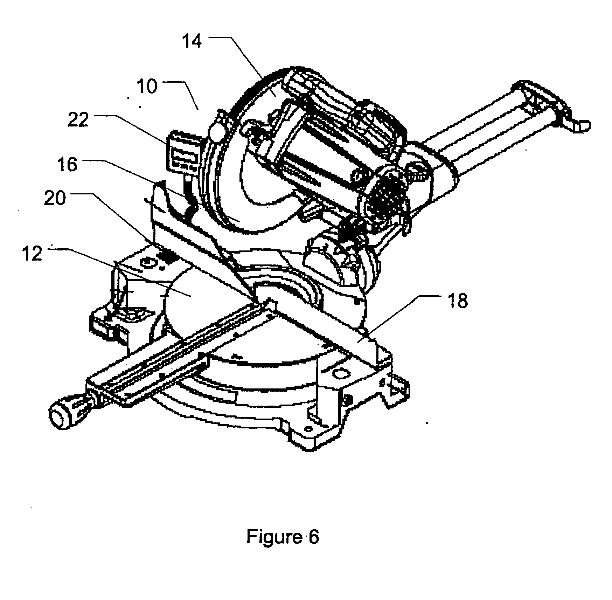

Furthermore, the detecting device 44 and the disk 38 may be coupled below the rotatable member 24, as shown in Figure 5. As illustrated in Figures 5 and 6, in one aspect of the measurement device 20, a mounting bracket 50 is coupled with the shaft 32. The mounting bracket 50 includes a first portion 52 and a second portion 54. The first portion 52 of the mounting bracket 50 is rotatably coupled with the first end 34 and the second end 36 of the shaft 32. The second portion 54 of the mounting bracket 50 includes a set of pins 56. Disposed about each pin 56 is a biasing member 58. The first portion 52 of the mounting bracket 50 further includes two eyelets 60 disposed on either side of the rotatable member 24. The eyelets 60 of the first portion 52 of the mounting bracket 50 are designed to slidably engage the pins 56 of the second portion 54 of the mounting bracket 50. The biasing members 58 allow the first portion 52 of the mounting bracket 50 to reciprocate with respect to the second portion 54 of the mounting bracket 50. As discussed above, the disk 38 and the detecting device 44 may also be disposed below the rotatable member 42.

In this embodiment, the second portion 54 of the mounting bracket 50 is fixedly coupled with the fence 18 of the miter saw 10. The first portion 52 of the base 50 is orientated and adjusted with respect to the second portion 54 of the base such that a portion of the rotatable member 24 extends beyond the fence 18, such as to contact a workpiece 30, if present. The position of the measurement device 20 may be moved relative to the fence 18. For example, the measurement device 20 may be moved to a position closer to the saw blade 16 along the fence 18.

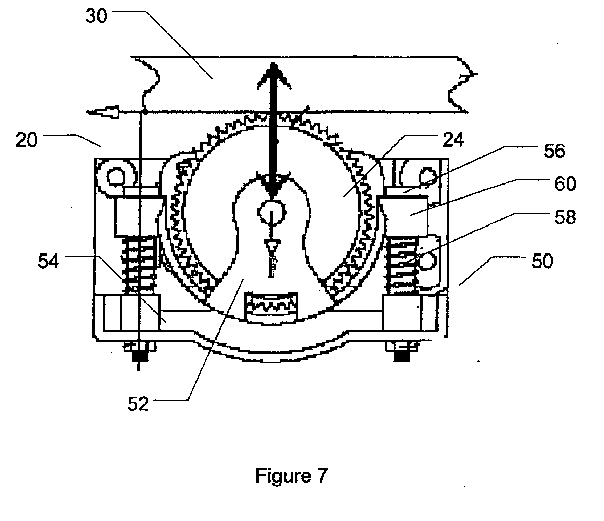

In another embodiment of the digital measurement system, the measurement device 20 is coupled with the base 12 of the miter saw 10, as illustrated in Figure 7. In this embodiment, the configuration is substantially the same as the embodiment described above. However, in this embodiment, the mounting bracket 50 is coupled with the base 12 such that a small portion of the rotatable member 24 extends from the surface of the base 12, such as to contact a workpiece 30. It is not necessary to position the measurement device 20 adjacent to the fence 18, and the measurement device 20 may be placed in any other desirable position.

In operation, a user selects to cut a desired workpiece 30 to a certain length "$L$." The user places the workpiece 30 in a position adjacent to the fence 18 of the miter saw 10. The force of the workpiece 30, indicated as "F" in Figure 6, causes the first portion 52 of the mounting bracket 50 to bias toward the second portion 54 of the mounting bracket 50. However, the biasing members 58 force the first portion 52 of the mounting bracket 50 towards the workpiece 30 to ensure that the rotatable member 24 of the measurement device 20 is in contact with the workpiece 30. This biasing characteristic of the bracket 50 allows the rotatable member 24 to keep in contact with the workpiece 30, even if the surface of the workpiece 30 is uneven or irregular. The user resets the digital display 22 and moves the workpiece 30 along the fence 18. As the workpiece 30 traverses the fence 18, and for that matter, the base 12, the movement of the workpiece 30 rotates the rotatable member 24 of the measurement device 20. In the other embodiment, as shown in Figure 7, the method of operation is substantially the same, except that the measurement device 20 is coupled with the base 12.

In either embodiment, the rotation of the rotatable member 24 is translated to the disk 38 via the shaft 32. As the disk 38 rotates, the apertures 42 of the disk 38 similarly rotate. As an aperture 42 passes between the detecting device 44, the sensor 48 detects the light produced from the light emitting source 46 that passes through the aligned aperture 42. Each time the sensor 48 detects the light, the sensor 48 generates and sends a signal to the digital display 22. The digital display 22 calculates the distance traveled by the workpiece 30 with respect to the rotatable member 24. This process is repeated each time an aperture 42 comes into alignment with the light emitting source 46 and the sensor 48. The apertures 42 are spaced from each other and, desirably, are equally spaced from each other. As will be appreciated from the description below, the arc or distance between the adjacent apertures 42 may affect the numerical significance of the display. For example, a greater number of apertures 42 may result in a smaller distance between adjacent apertures 42. Accordingly, the numerical significance will increase as compared to a lesser number of apertures 42.

Accordingly, one equation to calculate the distance traveled, $L_T$, for a disk 38 having N number of apertures 42, and with a rotatable member 24 with a radius of R is: $L_T = ((\frac{4\pi^2 * R}{N}) * T - y)$, where $T$ is the number of times the sensor 48 detected an aperture 42 that passed through the detecting device 44 and $y$ is the offset between the saw blade 16 and the outer diameter of the rotatable member 24. In the alternative, $T$ may represent the number of times the sensor disposed on the disk 38 detects the light emitted from the light emitting source 46 or the number of times the light is reflected from a reflector disposed on the disk 38 is detected by a sensor. The offset, $y$, will either be added to the length of travel or subtracted, depending from which direction the workpiece 30 is traveling.

Once the distance traveled $L_T$, is equal to the desired length, $L$, the user may then power on the miter saw 10 and cut the workpiece 30. A visual or audible indicator may provide a signal to the user once the workpiece is in a position where its length, $L_T$, is equal to $L$. The digital display system 22 would allow for the input of the desired length, $L$, and once reached, the display screen of the display system 22 provide a visual indication such as flashing or changing to a different color or any other suitable visual indication. Alternatively, a buzzer, chime, or other auditory indicator may be activated to alert the user once the desired length, $L$, has been reached.

Once the workpiece 30 is cut into a desired length, $L$, the user may reset the digital display 22 and continue to measure a second workpiece to a desired length. Once $L_T$, is equal to $L$, which may or may not be the same length as the first workpiece, the user may then cut the workpiece 30. These steps may be repeated and it is not necessary for the user to reset the digital display 22 each time. The digital display 22 may be designed to display the distance traveled $L_T$, in U.S. or metric units, and may have other capabilities, such as calculating the total length cut with a price per linear foot calculation.

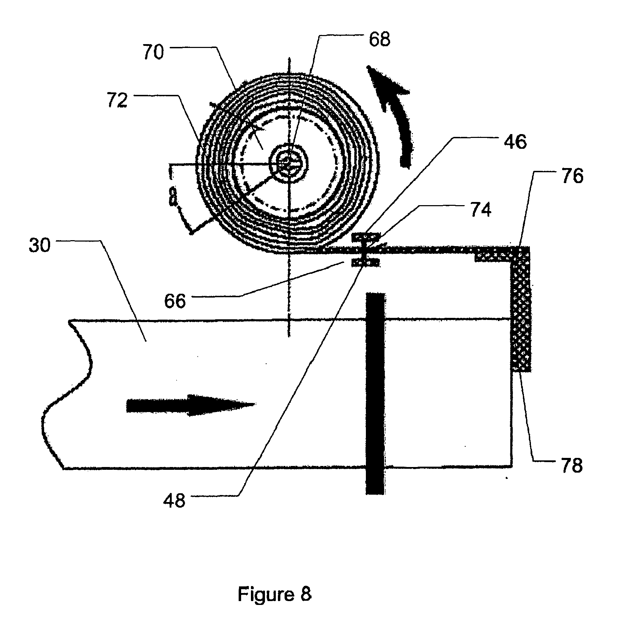

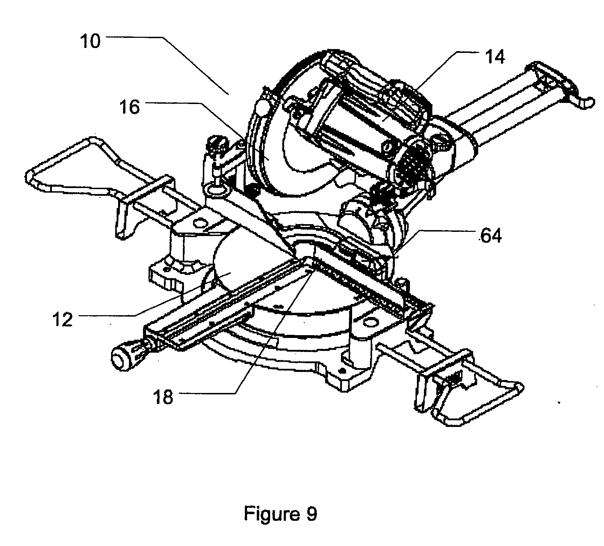

In yet another embodiment of the digital measurement system and the measurement device 20, as illustrated in Figures 8 and 9, a tape measurement device 62 is disposed adjacent to the fence 18 of the miter saw 10. The tape measurement device 62 is disposed in a housing 64, where the housing 64 is coupled with the fence 18 and a digital display 22. As better illustrated in Figure 8, adjacent to the tape measurement device 62 is a detecting device 44. The detecting device 44 is also disposed in the housing 64 and includes a light emitting source 46 and a sensor 48. The tape measurement device 62 is rotatable about an axis 68, and includes a circular member 70 having a roll of tape 72 wrapped about the circular member 70 with the roll of tape 72 having a series of spaced apertures 74 disposed therein that are alignable with the light emitting source 46 and the sensor 48. As discussed with the other embodiments above, the apertures 74 may be replaced with sensors or reflectors. Located on the free end 76 of the tape 72 may be a stopper 78.

In operation, and similar to the first two embodiments of the measurement device 20, a workpiece 30 is placed adjacent to the fence 18 of the miter saw 10 and the stopper 76 of the tape measurement device 62. The digital display 22 is reset and the workpiece 30 is moved along the fence 18. The movement of the workpiece 30 also extends the stopper 76 that is coupled with the tape 72. As the tape 72 passes between the detecting device 44, the sensor 48 sends a signal to the digital display 22 each time the sensor 48 detects a light from the light emitting source 46. The digital display 22 records the number of signals sent by the sensor 48 and converts the signals into a linear length traveled by the workpiece 30, using an equation similar to the equation described above. An example of one equation would be: $L_T = ((N - 1) * D - y)$, where $N$ is the number of apertures detected, $D$ is the distance between apertures, and $y$ is the offset value. As described with respect to the first and second embodiments, once a desired length is achieved, a user may power on the miter saw 10 and cut the workpiece 30. This process may be repeated with different desired lengths and may not be necessary to power off the miter saw 10 between the cuts.

While the invention has been illustrated and described in detail in the drawings and foregoing description, the same is to be considered as illustrative and not restrictive in character, it being understood that only exemplary embodiments have been shown and described and do not limit the scope of the invention in any manner. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the scope thereof, and, therefore, only such limitations should be imposed as are indicated by the appended claims.

## Claims

1. A measurement device coupled with a power tool comprising:

   a rotatable member rotatable about an axis; a shaft having a first end and being coupled with the rotatable member along the axis; a disk coupled with the first end of the shaft; and a detecting device disposed adjacent to the disk, wherein the detecting device provides an output as a portion of a workpiece actuates the disk of the detecting device.

2. The measurement device of claim 1 further comprising a mounting bracket having a first portion and a second portion with the mounting bracket being coupled to the shaft.

3. The measurement device of claim 2 further comprising at least one biasing member coupling the first portion of the mounting bracket with the second portion of the mounting bracket.

4. The measurement device of claim 2 or 3 further comprising at least one pin member coupling the first portion of the mounting bracket with the second portion of the mounting bracket.

5. The measurement device of claim 2, 3 or 4 wherein the detecting device is coupled with the first portion of the mounting bracket.

6. The measurement device of any preceding claim wherein the disk has at least one electrical sensor disposed thereon.

7. The measurement device of any one of claims 1 to 5 wherein the disk has at least one reflective marker disposed thereon.

8. The measurement device of any one of claims 1 to 5 wherein the disk has at least one aperture formed therein.

9. The measurement device of claim 8 where the apertures are evenly spaced from one another.

10. The measurement device of claim 5 wherein the detecting device further comprises at least one light emitting source and at least one sensor.

11. The measurement device of claim 10 wherein the second portion of the mounting bracket is associated with a portion of a fence of the power tool.

12. The measurement device of claim 10 wherein the second portion of the mounting bracket is associated with a portion of a base of the power tool.

13. The measurement device of any preceding claim wherein the rotatable member is a roller.

14. The measurement device of claim 13 wherein the roller further comprises a gripping element to grip a workpiece.

15. A measurement device coupled with a power tool comprising:

   a roller rotatable about an axis;
   a shaft having a first end and a second end and being fixably coupled with the roller along the axis;
   a disk coupled with the first end of the shaft; and
   a mounting bracket coupled to the first end and the second end of the shaft, the mounting bracket further comprising:

      a first portion reciprocably coupled with a second portion by at least one biasing member; and
      a detecting device coupled with the first portion of the mounting bracket and disposed adjacent to the disk, wherein the detecting device provides an output as a portion of a workpiece actuates the disk of the detecting device.

16. The measurement device of claim 15 wherein at least one sensor is disposed on the disk.

17. The measurement device of claim 15 wherein at least one reflective marker is disposed on the disk.

18. The measurement device of claim 15 wherein the disk has at least one aperture formed therein.

19. The measurement device of claim 18 wherein the detecting device further comprises at least one light emitting source and at least one sensor.

20. The measurement device of any one of claims 15 to 19 where the second portion of the mounting bracket is coupled with a portion of a fence of the power tool

21. The measurement device any one of claims 15 to 19 where the second portion of the mounting bracket is coupled with a portion of a base of the power tool.

22. A measurement device coupled with a power tool comprising:

   a roller rotatable about an axis;
   a shaft having a first end and a second end and being fixably coupled with the roller along the axis;
   a disk coupled with the first end of the shaft, the disk having a plurality of apertures formed therein, where the plurality of apertures are spaced evenly around a circumference of the disk;
   a mounting bracket coupled to the shaft, the mounting bracket further comprising:

      a first portion coupled with a second portion by at least one biasing member, and coupled with the first end and the second end of the shaft; and
      a detecting device coupled with the first portion of the mounting bracket, wherein the detecting device further comprises at least one light emitting source and at least one sensor, where the disk is disposed therebetween, wherein the detecting device generates an electrical pulse each time the at least one aperture passes between the detecting device as the disk is rotated by a workpiece.

23. The measurement device of claim 22 wherein the roller further comprises a gripping element.

24. The measurement device of claim 22 or 23 wherein the second portion of the mounting bracket is coupled with a portion of a fence of the power tool.

25. The measurement device of claim 22 or 23 wherein the second portion of the mounting bracket is coupled with a portion of a base of the power tool.

26. A measurement device coupled with a power tool comprising:

   a housing;
   a digital display coupled with the housing;
   a roll tape disposed in the housing; and

a detecting device disposed in the housing adjacent to a portion of the roll tape, wherein the detecting device generates an electrical signal as the roll tape is displaced by a workpiece.

27. The measurement device of claim 26 further comprising at least one sensor disposed on the roll tape.

28. The measurement device of claim 26 further comprising at least one reflective marker disposed on the roll tape.

29. The measurement device of claim 26 wherein the roll tape further comprises at least two evenly spaced apertures formed therein.

30. The measurement device of claim 29 wherein the detecting device comprises at least one light emitting source and at least one sensor, with at least a portion of the roll tape is disposed therebetween, such that each time an aperture passes between the detecting device an electrical pulse is generated and transmitted to the display system.

31. The measurement device of any one of claims 26 to 30 wherein the roll tape has a first end coupled with a stopper.

32. The measurement device of any one of claims 26 to 31 wherein the housing is disposed on a portion of a fence of the power tool.

33. A measurement device coupled with a power tool comprising:

a housing disposed on a fence;
a digital display coupled with the housing;
a roll tape disposed in the housing having a series of evenly spaced apertures formed therein; and
a detecting device disposed in the housing, the detecting device comprising:

at least one light emitting source and at least one sensor with a least a portion of the roll tape disposed therebetween, where the roll tape is displaced by a workpiece, such that each time an aperture passes between the detecting device an electrical pulse is generated and transmitted to the display system.

34. The measurement device of claim 33 wherein a first end of the roll tape is coupled with a stopper.

Figure 1

Figure 2

Figure 3

Figure 4

Figure 5

Figure 6

Figure 7

Figure 8

Figure 9